Europäisches Patentamt

European Patent Office

Office européen des brevets

(11) Publication number: **0 171 169**
**B1**

# EUROPEAN PATENT SPECIFICATION

(45) Date of publication of patent specification: 25.05.88

(51) Int. Cl.⁴: **F 16 D 13/70**

(21) Application number: **85304691.0**

(22) Date of filing: **01.07.85**

(54) Pressure plates for diaphragm spring clutches.

(30) Priority: **16.07.84 IT 2190484**

(43) Date of publication of application:
**12.02.86 Bulletin 86/07**

(45) Publication of the grant of the patent:
**25.05.88 Bulletin 88/21**

(84) Designated Contracting States:
**DE FR GB IT**

(56) References cited:
FR-A- 953 554
FR-A-2 106 215
FR-A-2 495 716
GB-A- 643 481
GB-A-1 347 485

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Cucinotta, Luigi
Castelbellino Via Medi 6
Ancona (IT)**

(74) Representative: **Cundy, Anthony Brian
Anthony Cundy & Company 384 Station Road
Dorridge
Solihull West Midlands B93 8ES (GB)**

Courier Press, Leamington Spa, England.

## Description

The invention relates to pressure plates for use in diaphragm spring friction clutches.

A typical diaphragm spring friction clutch is described in GB—A—1 347 485 (Automotive Products Limited). Such a diaphragm spring clutch incorporates a cover member intended to be mounted to a vehicle flywheel, an annular cast iron pressure plate mounted within the cover for rotation therewith, a diaphragm spring acting between the cover and the pressure plate to urge the pressure plate towards the flywheel and a driven plate which is in use gripped frictionally between the pressure plate towards the flywheel and a driven plate which is in use gripped frictionally between the pressure plate and the flywheel. The pressure plate is normally held coaxial with the cover and driven rotationally by the cover through three generally tangential drive straps connected to externally projecting lugs on the pressure plate. The pressure plate also has a machined annular axially directed friction face for engagement with the driven plate. On the opposed face of the pressure plate there is normally an annular raised rib against which the diaphragm spring bears. This rib acts as a pivot as the dishing of the diaphragm spring is varied during clutch actuation but as the dishing also alters the effective diameter of the diaphragm spring, there is a degree of sliding movement between the diaphragm spring and the pressure plate rib. In known friction clutches, the annular rib of the pressure plate is also machined to a suitable radius. During casting of the pressure plate, there is a tendency for the annular rib to cool down more quickly than the main body of the pressure plate and this creates local hardening known as chill-hardening of the casting in the region of the rib. This hardened rib is unsuitable for producing a suitably machined surface so the rib is cast much deeper than is required in the resulting pressure plate and the chilled edge of the rib is machined off. A typical pressure plate is thus machined on both sides to produce its friction face and the diaphragm spring engaging surface on the end of the rib. During these maching operations, other more minor machining operations which may be required on faces of drive lugs and other parts of the pressure plate may be performed.

The present invention is concerned particularly with providing for simplified manufacture of a pressure plate for use in a diaphragm spring clutch.

In accordance with the present invention there is provided a pressure plate for use in a diaphragm spring friction clutch comprising an annular casting having an axially directed machined friction face for engagement with a driven plate, an opposed face having a raised annular rib against which in use a diaphragm spring engages to apply a clamp load to the pressure plate, and outwardly directed drive lugs, wherein the surface of each lug facing in the same direction as said axially directed friction face is machined for receipt of a drive strap, the opposed face of each lug and the raise rib being in the as-cast condition in the completed pressure plate.

With modern casting techniques such as die-casting, it is possible to cast the edge of such a rib such that it has a sufficiently regular and smooth surface to receive the clamp load from the diaphragm spring and allow the required pivotal and sliding movement of the diaphragm spring. A particular advantage is that the chill-hardened edge of the rib provides particularly good resistance to wear.

It is therefore possible to carry out the necessary machining operations on the pressure plate from one side thereof, namely the same side as the axially directed machined friction face.

Reference throughout this specification to a machined friction face is intended to refer to machining in the broadest sense, including milling and grinding which might be used to provide good quality friction faces.

An embodiment of the invention will now be described by way of example only with reference to the accompanying drawings in which:

Figure 1 is an end view of a pressure plate in accordance wih the invention;

Figure 2 is a section on line II—II of figure 1; and

Figure 3 is a view corresponding to figure 2 showing a conventional prior art casting and the extent to which it is machined to produce a complete driven plate.

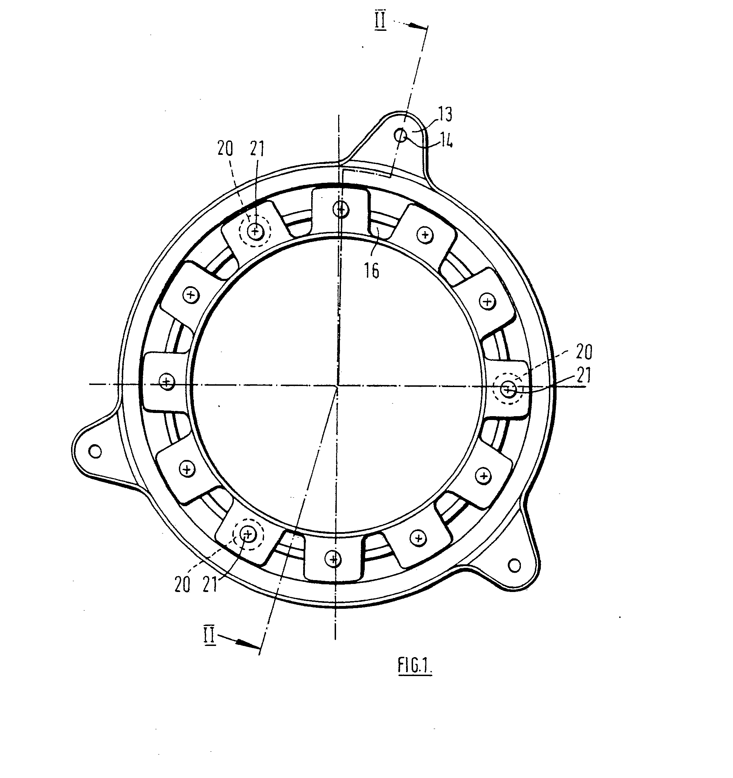

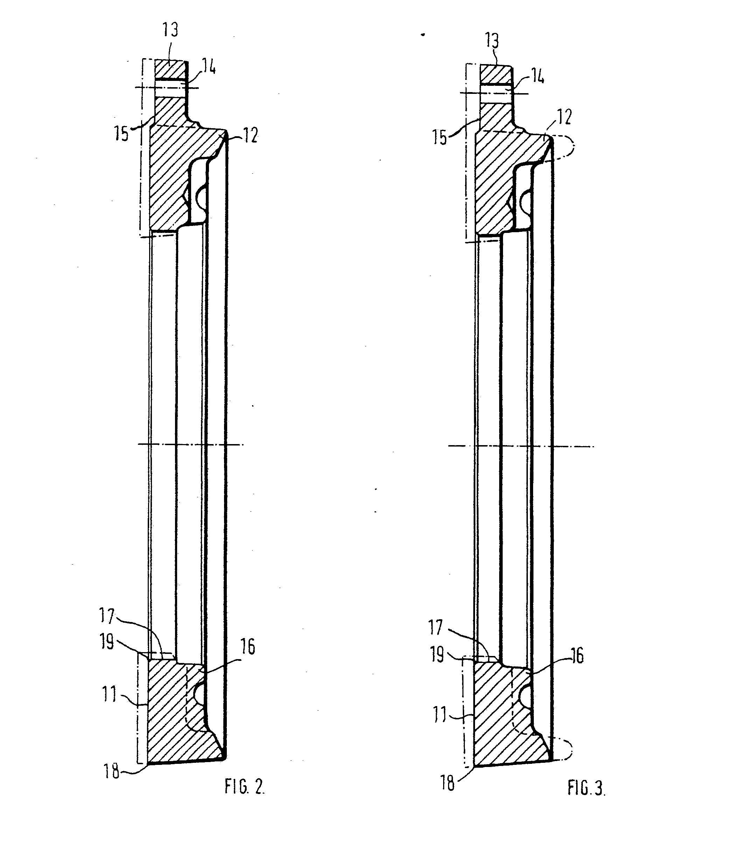

The pressure plate shown in figures 1 and 2 is suitable for use in a diaphragm spring friction clutch as described in GB—A—1 347 485 referred to above. The pressure plate is a generally annular casting on which has been been machined an axially directed machined friction face 11 for engagement with a driven plate (not shown). The pressure plate has a rear face opposed to the friction face 11 and this rear face incorporates an annular raised rib 12 extending generally around the outer edge of the annular casting and having a radiussed outer end for engagement by a diaphragm spring (not shown). The pressure plate also incorporates three outwardly directed drive lugs 13 incorporating drilled rivet holes 14 and flat machined faces 15 for engagement with flexible sheet steel drive straps. Machined faces 15 face in the same direction as the machined friction surface 11 but are set back slightly from the surface 11.

Diametrically inward from the rib 12 is a series of twelve lands 16 which effectively vary the thickness of the pressure plate around its circumference. One effect of these lands is to cause air surrounding the pressure plate to rotate with pressure plate and be flung outward by centrifugal force to create a cooling air flow over the pressure plate.

With the pressure plate of figures 1 and 2, no machining is required on the rear face of the pressure plate, the axial machining being restricted to the friction face 11 and to face 15 of the lugs 13. Other machining operations required are the drilling of holes 14 in the lugs 13, machining an internal cylindrical surface 17 around the inner periphery of the pressure plate and also machining small chamfers 18 and 19 at the outer and inner edges of the friction face. All of these machining operations can be effected from the friction face side of the driven plate and there are no machining operations performed from the opposite side thereof. Thus the complete set of machining operations can be carried out while the pressure plate is mounted from its rear face. In this connection, the rear face of the pressure plate is provided with three mutually spaced mounting surfaces 20 with local depressions 21 in order to provide for accurate location of the pressure plate during machining. The rear face of the pressure plate remains unmachined and, in particular, the outer end of the raised rib 12 remains in the as-cast conditions. During the casting operations, some chill-hardening occurs at this annular projection due to its fast cooling rate associated with a large surface area and this tends to harden that part of the pressure plate in relation to other parts of the pressure plate. This assists in resisting wear of a diaphragm spring engaged with the rib 12.

As compared with conventional pressure plates, the machining operations required are substantially reduced. Also, a more compact casting can be used and less metal than with a conventional pressure plate needs to be machined away from the casting to produce the final product. Both of these factors help to reduce the cost of production of a pressure plate. A general indication of the areas from which metal is machined is indicated by the chain-dotted outline of the casting as it appears before machining.

In order to contrast the present with conventional procedures, figure 3 shows a conventional pressure plate for which the pressure plate of figures 1 and 2 could be substituted and also shows in chain-dotted outline the original shape of the casting prior to machining. It is evident from figure 3 that a substantial amount of metal has been machined away from the casting to produce the raised annular rib of suitable size. Also, the rib of figure 3 is less hard than the outer edge of the corresponding rib in figures 1 and 2 due to the chill-hardening effect so the rib of figure 3 is more likely to wear unacceptably during use of a clutch.

## Claims

1. A pressure plate for use in a diaphragm spring friction clutch comprising an annular casting having an axially directed machined friction face (11) for engagement with a driven plate, an opposed·face having a raised annular rib (12) against which in use a diaphragm spring engages to apply a clamp load to the pressure plate, and outwardly directed drive lugs (13), characterised in that the surface (15) of each lug facing in the same direction as said axially directed friction face (11) is machined for receipt of a drive strap, the opposed face of each lug and the raised rib (12) being in the as-cast condition in the completed pressure plate.

2. A pressure plate as claimed in claim 1 characterised by the provision of three mutually spaced mounting surfaces (20) on said opposed face of the pressure plate for mounting thereof during machining.

3. A diaphragm spring friction clutch characterised in that it incorporates a pressure plate as claimed in claim 1 or claim 2.

## Patentansprüche

1. Druckplatte für eine Tellerfeder-Reibungskupplung, mit einem ringförmigen Gußteil, das eine axial gerichtete, spanend bearbeitete Reibungsstirnfläche (11) zum Eingriff mit einer angetriebenen Platte, eine entgegengesetzte Stirnfläche, die eine erhabene ringförmige Rippe (12) hat, an welcher im Gebrauch eine Tellerfeder angreift, um eine Klemmkraft auf die Druckplatte aufzubringen, und nach außen gerichtete Antriebsnasen (13) hat, dadurch gekennzeichnet, daß die Oberfläche (15) einer jeden Nase, die in die gleiche Richtung wie die axial gerichtete Reibungsfläche (11) weist, für die Aufnahme eines Antriebsbandes spanend bearbeitet ist, wobei die entgegengesetzte Stirnfläche einer jeden Nase und die erhabene Rippe (12) im Wie-Gegossen-Zustand bei der fertigen Druckplatte sind.

2. Druckplatte nach Anspruch 1, gekennzeichnet durch drei gegenseitig beabstandete Fixierflächen (20) auf der entgegengesetzten Stirnfläche der Druckplatte zum Fixieren derselben während der spanenden Bearbeitung.

3. Tellerfeder-Reibungskupplung, dadurch gekennzeichnet, daß sie eine Druckplatte gemäß Anspruch 1 oder Anspruch 2 beinhaltet.

## Revendications

1. Plateau de pression destiné à être utilisé dans un embrayage à friction à diaphragme élastique comprenant une pièce moulée annulaire ayant une surface de friction (11) usinée et dirigée axialement, de contact avec un plateau mené, une face opposée ayant une nervure annulaire (12) en saillie contre laquelle en service un diaphragme élastique vient en contact pour appliquer une charge de serrage au plateau de pression, et des pattes d'entraînement (13) dirigées vers l'extérieur, caractérisé en ce que la surface (15) de chaque patte dirigée dans le même sens que ladite surface de friction (11) dirigée axialement est usinée pour recevoir une bande d'entraînement, la face opposée de chaque patte et la nervure (12) étant brutes de fonderie dans le plateau depression fini.

2. Pleteau de pression suivant la revendication 1, caractérisé en ce qu'il comporte trois surfaces (20) de fixation mutuellement espacées sur ladite face opposée du plateau pour la fixation de celui-ci pendant l'usinage.

3. Embrayage à friction à diaphragme élastique caractérisé en ce qu'il comporte un plateau de pression tel que défini suivant la revendication 1 ou 2.

FIG.1.

FIG. 2.

FIG. 3.

2